# EUROPÄISCHE PATENTSCHRIFT

(11) **EP 3 519 217 B1**
(45) Veröffentlichungstag und Bekanntmachung des Hinweises auf die Patenterteilung: **30.06.2021**
(21) Anmeldenummer: 17778239.8
(22) Anmeldetag: 22.09.2017
(51) Int. Cl.: B60J 1/00, B60J 1/02

(54) **KRAFTFAHRZEUG, AUFWEISEND ZWEI A-SÄULEN UND EINE FRONTSCHEIBE**
VEHICLE WITH TWO A-PILLARS AND A WINDSCREEN
VÉHICULE AUTOMOBILE AVEC DEUX A-MONTANTS ET UN PARE-BRISE

(30) Priorität: 27.09.2016 EP 16190774
(43) Veröffentlichungstag der Anmeldung: 07.08.2019
(73) Patentinhaber: Covestro Intellectual Property GmbH & Co. KG, 51373 Leverkusen (DE)
(72) Erfinder: KLEIN, Andreas, 51371 Leverkusen (DE); GROSSER, Ulrich, 51515 Kürten (DE); DORIN, Florian, 51375 Leverkusen (DE)
(74) Vertreter: Levpat
(86) Internationale Anmeldenummer: PCT/EP2017/074041
(87) Internationale Veröffentlichungsnummer: WO 2018/060081

(56) Entgegenhaltungen:
- WO-A1-2006/036013
- FR-A- 806 811
- JP-U- H0 717 616
- US-A- 5 009 460

## Beschreibung

Gegenstand der vorliegenden Erfindung ist ein Kraftfahrzeug, insbesondere ein Personenkraftfahrzeug, das eine aus einem Thermoplasten hergestellte Frontscheibe aufweist, die derart ausgebildet ist, insbesondere derart dreidimensional geformt ist, dass sie eine Verbindung zwischen Fahrzeugdach und der vorderen Spritzwand herstellt. Vorzugsweise ist diese Frontscheibe derart ausgebildet, dass sie die A-Säulen des Kraftfahrzeugs ohne an die A-Säule angrenzende Fuge umschließt, so dass die A-Säulen bei geschlossener Fahrzeugkabine nicht witterungsbedingten Einflüssen der Außenwelt ausgesetzt sind. Außerdem vorzugsweise ist die Frontscheibe derart ausgebildet, dass sie in der Lage ist, einerseits Kräfte vom Fahrzeugdach und von der vorderen Spritzwand aufzunehmen, andererseits Kräfte an diese Bauteile abzugeben.

Herkömmliche Kraftfahrzeuge, insbesondere Personenkraftfahrzeuge (Pkw), weisen in aller Regel zwei sogenannten A-Säulen auf, die zum einen die Verbindung zwischen Fahrzeugdach und der vorderen Spritzwand herstellen, zum anderen die seitlichen Teile des Rahmens für die Frontscheibe darstellen. Die A-Säulen haben damit vor allem die Aufgabe, Kräfte aufzunehmen und gegebenenfalls auch weiterzuleiten, die von anderen Bauteilen, beispielsweise der Frontscheibe und insbesondere der Rohkarosse, auf die A-Säulen geleitet werden. Dies bedingt, dass sowohl das Material als auch die Konstruktion der A-Säulen den zu erwartenden Kräften ausgewählt bzw. angepasst werden muss. Darüber hinaus sind die A-Säulen zumindest mit einem Teil ihrer Oberflächen Teil der Außenoberfläche des Kraftfahrzeugs. Daher müssen die A-Säulen gegen witterungsbedingte Korrosion geschützt werden, in der Regel durch eine geeignete Beschichtung und/oder Verkleidung.

Diese Anforderungen an die A-Säulen bringen es mit sich, dass eine A-Säule verhältnismäßig stabil ausgelegt werden muss und in der Regel im eingebauten Zustand eine geschlossene und für das menschliche Auge undurchsichtige Struktur aufweist. Dies bringt den Nachteil mit sich, dass eine A-Säule ein Sichthindernis für einen Fahrer eines Kraftfahrzeugs darstellt. Dies kann im Straßenverkehr oder auch beim häuslichen Einparken leicht zu Unfällen führen.

Dieses Problem wurde in der DE 102 30 030 A1 aufgenommen und angeblich dadurch gelöst, dass die A-Säule mit einer Mehrzahl von als Fenstern ausgebildeten Durchsichtöffnungen versehen wird. Dieses Verfahren hat den Nachteil, dass das beide A-Säulen separat gegenüber der Außenwelt abgedichtet werden müssen, was einen erheblichen Mehraufwand bedeutet. Aufgrund der Festigkeitsanforderungen an die A-Säule können die einzelnen Durchsichtöffnungen aber nur verhältnismäßig klein strukturiert werden, insbesondere sind viele Zwischenwände erforderlich, so dass eine gute Sicht durch die A-Säule nicht gegeben ist. Darüber hinaus ist die witterungsfeste Beschichtung einer A-Säule aufwändig und teuer.

Dieses Problem wurde in der DE10 2011 011 320 A1 aufgenommen und angeblich dadurch gelöst, dass die A-Säule zwei voneinander durch eine lichte Öffnung getrennte Holmen umfasst. Jedoch muss diese Öffnung durch ein nur teiltransparentes Paneel stabilisiert und damit verschlossen werden, damit die A-Säule die nötige Festigkeit aufweist.

Auch die DE 10 2008 058 182 A1 nimmt dieses Problem auf und löst es durch eine A-Säule, die durch lichte Öffnungen getrennte Holme aufweist. Die Sicht wird aber weiterhin dadurch behindert, dass sich die Holme unmittelbar an der Frontscheibe befinden.

In der FR806811A ist bereits offenbart, dass ein Fahrzeug eine gekrümmte Frontscheibe aufweist. Jedoch weist dieses Fahrzeug keine A-Säulen auf. Daher kann aus der FR806811A keine Lehre abgeleitet werden, wie eine Frontscheibe auszubilden wäre, durch die ein Kraftfahrzeug zur Verfügung gestellt wird, dessen A-Säulen ein geringeres Sichthindernis darstellt als A-Säulen von vergleichbaren Kraftfahrzeugen und dessen A-Säulen nicht witterungsbedingten Einflüssen der Außenwelt ausgesetzt sind.

Aufgabe der vorliegenden Erfindung ist es, die Nachteile des Stands der Technik zu überwinden. Insbesondere Aufgabe des Stands der Technik ist es, ein Kraftfahrzeug zur Verfügung zu stellen, dessen A-Säule ein geringeres Sichthindernis darstellt als A-Säulen von vergleichbaren Kraftfahrzeugen und dessen A-Säule nicht witterungsbedingten Einflüssen der Außenwelt ausgesetzt ist.

Gelöst wird diese Aufgabe durch den Gegenstand des Hauptanspruchs.

Insbesondere gelöst wird die Aufgabe durch ein Kraftfahrzeug, dass zwei A-Säulen und eine Frontscheibe aufweist, wobei die Frontscheibe im Bereich der A-Säulen an der der jeweiligen A-Säule zugewandten Seite jeweils eine Krümmung mit einem Krümmungsradius von 5000 bis 5 mm aufweist, bevorzugt von 500 bis 10, besonders bevorzugt 200 bis 20 mm, ganz besonders bevorzugt von 150 bis 30 mm, insbesondere 100 bis 50 mm, aufweist und die Frontscheibe keine mechanische Verbindung zu den zwei A-Säulen aufweist...

Gegenstand der Erfindung ist somit ein Kraftfahrzeug, das zwei A-Säulen und eine Frontscheibe aufweist, wobei die Frontscheibe im Bereich der A-Säulen an der der jeweiligen A-Säule zugewandten Seite jeweils eine Krümmung mit einem Krümmungsradius von 5000 bis 5 mm aufweist, bevorzugt von 500 bis 10, besonders bevorzugt 200 bis 20 mm, ganz besonders bevorzugt von 150 bis 30 mm, insbesondere 100 bis 50 mm, aufweist und die Frontscheibe keine mechanische Verbindung zu den zwei A-Säulen aufweist.

Die Frontscheibe ist derart dreidimensional geformt, dass sie zu mindestens 70 % die Flächen der A-Säulen des Fahrzeugs gegenüber Umgebung außerhalb des Fahrzeugs an mindestens den Seiten der langgestreckten Bereiche der A-Säule umschließt, die der Außenwelt außerhalb des Kraftfahrzeugs zugewandt sind.

Der Begriff "der Außenwelt außerhalb des Kraftfahrzeugs zugewandt" bedeutet im Sinne der vorliegenden Erfindung, dass eine rechtwinklig von diesem Bereich ausgehende Sichtlinie auf die Außenwelt außerhalb des Kraftfahrzeugs, ohne den Fahrzeuginnenbereich durchlaufen zu müssen.

Der Begriff "keinerlei mechanische Verbindung zwischen der Frontscheibe und den A-Säulen" bedeutet im Sinne der vorliegenden Erfindung, dass sich zwischen den A-Säulen und der Frontscheibe nur die Umgebungsluft befindet. Unbenommen davon ist, dass die Frontscheibe und die A-Säulen über das Fahrzeugdach oder andere Karosserieteile, beispielsweise die vordere Spritzwand, mittelbar oder unmittelbar miteinander verbunden sind. Zwischen der Frontscheibe und den A-Säulen befinden sich jedoch keine Abstandshalter, Befestigungs- oder Verbindungsmittel, noch eine Klebeschicht.

Die Frontscheibe weist im Bereich der A-Säulen an der der jeweilig nächsten A-Säule zugewandten Seite zwischen zwei Punkten der Oberfläche der Frontscheibe, die dem Inneren des Kraftfahrzeugs zugewandt ist, wenn sie im Kraftfahrzeug eingebaut ist, also der Frontscheibeninnenseite, deren gedachte Verbindungslinie senkrecht zur langgestreckten Achse der nächstliegende A-Säule steht und deren Abstand entlang der Frontscheibeninnenseite von 20 bis 200 mm beträgt jeweils eine Krümmung mit einem Krümmungsradius von 5000 bis 5 mm auf, bevorzugt von 500 bis 10, besonders bevorzugt 200 bis 20 mm, ganz besonders bevorzugt von 150 bis 30 mm, insbesondere 100 bis 50 mm. Unter dem Begriff "im Bereich der A-Säulen" bedeutet in diesem Zusammenhang, dass zwischen der Frontscheibeninnenseite und einem beliebigen Punkt auf der jeweils nächsten A-Säule maximal ein Abstand von 100 mm ist.

Die Krümmung überstreicht dabei einen Winkel von 45° bis 135°, bevorzugt von 60° bis 120°, besonders bevorzugt von 75° bis 105°, ganz besonders bevorzugt 95° bis 100°.

Die Krümmungen an den beiden A-Säulen können gleich oder verschieden sein, bevorzugt sind sie gleich. Die Krümmung im Bereich einer A-Säule kann rechtwinklig zum Radius in den oben genannten Grenzen variieren.

Die Frontscheibe weist dabei eine Wandstärke von 20 bis 2 mm, bevorzugt von 12 bis 3 mm, besonders bevorzugt von 8 bis 4 mm, ganz besonders bevorzugt 7 bis 4,5 mm auf.

Zwischen der Frontscheibeninnenseite und dem zu der Frontscheibeninnenseite nächst liegenden Punkt der jeweils nächsten A-Säule besteht ein Abstand von 100 bis 1 mm, bevorzugt von 70 bis 5 mm, besonders bevorzugt von 50 bis 10 mm, ganz besonders bevorzugt etwa 20 mm. Bei einem solchen Abstand wird der sogenannte tote Winkel wirksam verkleinert.

Die Oberfläche der Frontscheibe, die der Außenwelt zugewandt ist, wenn sie im Kraftfahrzeug eingebaut ist, also die Frontscheibenaußenseite, weist dabei eine Fläche von 0,5 bis 4 m², bevorzugt 1 bis 3 m², besonders bevorzugt von etwa 1,5 bis 2,5 m² auf.

Die Frontscheibe ist in der Lage, einerseits Kräfte von vom Fahrzeugdach und der vorderen Spritzwand aufzunehmen, andererseits Kräfte an diese Bauteile abzugeben.

Zusätzlich zu den oben beschriebenen Krümmungen kann die Frontscheibe weiter strukturiert und/oder gekrümmt sein. Eine derart ausgebildete Frontscheibe ermöglicht es daher, die A-Säulen weniger stabil auszuführen. Die A-Säulen können daher beispielsweise mit geringeren Querschnitt ausgebildet werden. Alternativ können die A-Säulen gegabelt, also in Form zweier dünner Speichen mit einer dazwischen liegenden Öffnung, ausgeführt sein, wobei zwischen den Speichen kein verstärkendes Material vorhanden ist. Dieses ist auf Grund der Stabilität der Frontscheibe nicht mehr nötig. Vorzugsweise ist zwischen den Speichen nur Luft. Außerdem kann die A-Säule entlang der Karosserie weiter Richtung Fahrzeugheck verlagert werden.

Alternativ kann zwischen den Speichen auch in Bereichen, die die Sicht des Fahrers nicht behindern, eine Lichterzeugende Vorrichtung, beispielsweise ein Blinker, eingebaut werden.

Die A-Säulen können aber auch beispielsweise mit perforiert, also beispielsweise mit einer Netz-, Gerüst- oder Gitterstruktur oder einer anderen zumindest teilweise lichtdurchlässigen Struktur, ausgeführt werden.

Die Ausbildung der A-Säulen ermöglicht dem Fahrer eines erfindungsgemäßen Kraftfahrzeugs eine bessere Sicht auf die Umgebung des Kraftfahrzeugs und verringert damit die Unfallgefahr. Insbesondere, dass zwischen der Frontscheibe und den A-Säulen ein Abstand besteht, erweitert den Sichtbereich des Fahrers stark, da dadurch der sogenannte tote Winkel verkleinert wird. Auch die Wirkung, dass die A-Säule entlang der Karosserie weiter Richtung Fahrzeugheck verlagert werden kann, verringert den toten Winkel.

Dadurch dass die Frontscheibe derart dreidimensional geformt ist, dass sie zu mindestens 70 %, bevorzugt zu 70 bis 99 %, besonders bevorzugt zu 75 bis 95%, ganz besonders bevorzugt zu 80 bis 90 % die Flächen der A-Säulen des Fahrzeugs gegenüber Umgebung außerhalb des Fahrzeugs an mindestens den Seiten der langgestreckten Bereiche der A-Säule umschließt, die der Außenwelt außerhalb des Kraftfahrzeugs zugewandt sind, ist gewährleistet, dass die A-Säulen bei geschlossener Fahrzeugkabine nicht witterungsbedingten Einflüssen der Außenwelt ausgesetzt sind.

Dies ermöglicht es, auf eine aufwändige und teure Oberflächenbeschichtung oder -verkleidung der A-Säule zu verzichten. Dies löst die zusätzliche Aufgabe, einen kostengünstigeren Witterungsschutz für die A-Säule zur Verfügung zu stellen.

Darüber hinaus ist es so auch möglich, den Bereich der A-Säulen ästhetisch ansprechender zu gestalten.

Weiterhin vorzugsweise ist die Verbindung zwischen Frontscheibe und Fahrzeugdach einerseits und zwischen Frontscheibe und Spritzwand andererseits durch eine Klebeverbindung hergestellt. Besonders vorzugsweise weist die Frontscheibe außer der Klebeverbindung zwischen Frontscheibe und Fahrzeugdach einerseits und der Klebeverbindung zwischen Frontscheibe und Spritzwand andererseits keinerlei andere formschlüssige Verbindungen auf. Ganz besonders vorzugsweise weist die Frontscheibe außer der Klebeverbindung zwischen Frontscheibe und Fahrzeugdach einerseits und der Klebeverbindung zwischen Frontscheibe und Spritzwand andererseits keinerlei andere formschlüssige und kraftschlüssige Verbindungen auf.

Optional kann jedoch die Frontscheibe zusätzlich zu den Klebeverbindungen mit dem Fahrzeugdach und der vorderen Spritzwand eine Klebeverbindung oder mehrere Klebeverbindungen mit einer der A-Säulen oder beiden A-Säulen aufweisen. Dabei kann die Frontscheibe für jede A-Säule unabhängig voneinander jeweils eine Klebeverbindung oder mehrere Klebeverbindungen mit einer Speiche der jeweiligen A-Säule oder mit beiden Speichen der A-Säule aufweisen. Vorzugsweise weist die Frontscheibe an beiden A-Säulen nur eine oder mehrere Klebeverbindungen mit jeweils einer Speiche der A-Säule auf, wobei weiterhin vorzugsweise jeweils die Klebeverbindung entweder mit den beiden äußeren oder mit den beiden inneren Speichen der beiden A-Säulen ausgeführt ist.

Sofern zwischen der Frontscheibe und einer A-Säule eine Klebeverbindung vorhanden ist, ist die Klebeverbindung zwischen Frontscheibe und A-Säule vorzugsweise nur punktuell ausgeführt, das heißt, dass die Klebeverbindung nur an 5 bis 70 %, bevorzugt 10 bis 50 %, besonders bevorzugt 20 bis 40 % der Berührfläche zwischen Frontscheibe und A-Säule besteht.

Außerdem optional und unabhängig von der Verklebung der Frontscheibe mit einer A-Säule oder beiden A-Säulen kann die Frontscheibe auch mit einer oder beiden der Frontscheibe unmittelbar benachbarten Türen des Kraftfahrzeugs verklebt sein. Sofern zwischen der Frontscheibe und einer Tür eine Klebeverbindung vorhanden ist, ist die Klebeverbindung zwischen Frontscheibe und A-Säule vorzugsweise nur punktuell ausgeführt, das heißt, dass die Klebeverbindung nur an 5 bis 70 %, bevorzugt 10 bis 50 %, besonders bevorzugt 20 bis 40 % der Berührfläche zwischen Frontscheibe und A-Säule besteht.

Für eine solche Verklebung geeignete Klebstoffe können beispielsweise der WO2012055873A2 entnommen werden.

Vorzugsweise ist diese Frontscheibe derart ausgebildet, dass sie die A-Säulen des Kraftfahrzeugs so umschließt, dass sich weder zwischen der Frontscheibenaußenseite und einer A-Säule eine Fuge befindet, noch zwischen den Frontscheibenseitenbereichen, also den Bereichen der Frontscheibe, die weder Frontscheibeninnenseite noch Frontscheibenaußenseite sind, und einer A-Säule eine Fuge befindet.

Unter einer Fuge im Sinne der vorliegenden Erfindung wird ein langgestreckter lichter Raum zwischen den unmittelbar benachbarten Oberflächen zweier unmittelbar benachbarter Gegenstände verstanden, wobei die Länge der Fuge viel größer ist als die Breite und die Tiefer der Fuge. Eine Fuge im Sinne der vorliegenden Erfindung hat vorzugsweise mindestens eine Länge von 5 mm, bevorzugt von mindestens 10 mm, besonders bevorzugt von mindestens 20 mm, eine Breite von mindestens 0,25 mm, weiter bevorzugt von mindestens 0,5 mm, und besonders bevorzugt von mindestens 1 mm und eine Tiefe von mindestens 4 mm, weiter bevorzugt von mindestens 5 mm.

Die Vermeidung der Fuge zwischen der Frontscheibe und den A-Säulen hat den Vorteil, dass das Kraftfahrzeug eine verbesserte Aerodynamik aufweist. Dies bewirkt sowohl einen geringeren Energieverbrauch als auch ein geringeres Fahrzeuggeräusch. Beides bewirkt wiederum eine geringere Beeinträchtigung von Mensch und Umwelt.

Darüber hinaus wird durch die Vermeidung der Fuge zwischen der Frontscheibe und den A-Säulen das Erscheinungsbild des Kraftfahrzeugs verbessert.

Auch kann als besonderes ästhetisches Gestaltungsmerkmal betrachtet werden, dass die A-Säulen von außerhalb des Kraftfahrzeugs durch die Frontscheibe hindurch gesehen werden können.

Die Frontscheibe ist erfindungsgemäß bevorzugt ein Formteil aus einem transparenten thermoplastischen Polymer.

Transparent im Sinne der vorliegenden Erfindung bedeutet, dass der Kunststoff eine Lichtransmission (in Anlehnung an ASTM 1003 bzw. ISO 13468; angegeben in % und Lichtart D65/10°) von mindestens 6 %, weiter bevorzugt von mindestens 12 %, und besonders bevorzugt von mindestens 23 % aufweist. Weiterhin ist die Trübung vorzugsweise kleiner als 3 %, weiter bevorzugt kleiner als 2,5 %, und besonders bevorzugt kleiner als 2,0 %.

Thermoplastische Kunststoffe, die zur Herstellung der Frontscheibe verwendet werden können, sind Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), Polyamid, cyclisches Polyolefin, Poly- oder Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) weiter bevorzugt Polycarbonat, Copolycarbonat, Polyestercarbonat, aromatische Polyester oder Polymethylmethacrylat, oder Mischungen der genannten Komponenten, und besonders bevorzugt Polycarbonat und Copolycarbonat.

Auch Mischungen von mehreren thermoplastischen Polymeren, insbesondere wenn sie transparent miteinander mischbar sind, sind möglich, wobei in einer speziellen Ausführungsform eine Mischung aus Polycarbonat mit PMMA (weiter bevorzugt mit PMMA < 2 Gew.-%) oder Polyester bevorzugt ist.

Eine weitere spezielle Ausführungsform enthält in diesem Zusammenhang eine Mischung aus Polycarbonat und PMMA mit weniger als 2,0 Gew.-%, vorzugsweise weniger als 1,0 Gew.-%, weiter bevorzugt weniger als 0,5 Gew.-%, wobei mindestens 0,01 Gew.-% PMMA enthalten sind bezogen auf die Menge Polycarbonat, wobei das PMMA bevorzugt ein Molgewicht <40.000 g/mol aufweist. In einer besonders bevorzugten Ausführungsform beträgt der Anteil an PMMA 0,2 Gew.-%, und besonders bevorzugt 0,1 Gew.-%, bezogen auf die Menge Polycarbonat, wobei das PMMA bevorzugt ein Molgewicht <40.000 g/mol aufweist.

Eine alternative weitere spezielle Ausführungsform enthält eine Mischung aus PMMA und Polycarbonat mit weniger als 2 Gew.-%, vorzugsweise weniger als 1 Gew.-%, weiter bevorzugt weniger als 0,5 Gew.-%, wobei mindestens 0,01 Gew.-% Polycarbonat enthalten sind bezogen auf die Menge PMMA.

In einer besonders bevorzugten Ausführungsform beträgt der Anteil an Polycarbonat 0,2 Gew.-%, und besonders bevorzugt 0,1 Gew.-%, bezogen auf die Menge PMMA.

Geeignete Polycarbonate für die Herstellung dereiner erfindungsgemäß verwendbaren Kunststoffzusammensetzung sind alle bekannten Polycarbonate. Dies sind Homopolycarbonate, Copolycarbonate und thermoplastische Polyestercarbonate.

Die Herstellung der Polycarbonate erfolgt vorzugsweise nach dem Phasengrenz-flächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phos¬gen oder beim Schmelzeumesterungsprozess Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (s.7, Z. 21 bis s. 10, Z. 5), EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es könne auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009 und DE 25 00 092 A1 (3,3-bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Polycarbonate können darüber hinaus übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschriebenen Flammschutzmittel, optische Aufheller, Fließverbesserer, organische oder anorganische Farbmittel, Thermostabilisatoren, anorganische Pigmente, Entformungsmittel oder Verarbeitungshilfsmittel enthalten.

Ferner können UV-Absorber oder IR-Absorber enthalten sein. Geeignete UV-Absorber sind beispielsweise beschrieben in der EP 1 308 084 A1, in der DE 102007011069 A1 sowie in der DE 10311063 A1.

Geeignete IR-Absorber sind beispielsweise in EP 1 559 743 A1, EP 1 865 027 A1, DE 10022037 A1, DE 10006208 A1 sowie in den italienischen Patentanmeldungen RM2010A000225, RM2010A000227 sowie RM2010A000228 offenbart.

Von den in der zitierten Literatur genannten IR-Absorbern sind solche auf Borid- und Wolframatbasis sowie auf ITO und ATO basierende Absorber sowie Kombinationen daraus bevorzugt.

In einer besonders bevorzugten Ausführungsform der vorliegenden Erfindung ist der thermoplastische Kunststoff für die Frontscheibe ein Polycarbonat mit einem Molekulargewicht Mw von 22.000 bis 30.000, weiter bevorzugt von 24.000 bis 28.000 und besonders bevorzugt von 25.000 bis 27.000, ermittelt durch Gelpermeationschromatographie mit Polycarbonateichung.

Die Fließfähigkeit des für die Herstellung der Frontscheibe verwendeten Polycarbonats reicht ferner aus, um im Spritzprägeprozeß Fließwege von 600 mm bis 1200 mm, bevorzugt 800 mm bis 1100 mm, besonders bevorzugt 900 mm bis 1000 mm zu realisieren, wobei die Schmelzetemperatur vorzugsweise von 280 °C bis 320 °C, weiter bevorzugt von 300 °C bis 310 °C beträgt, die Werkzeugtemperatur vorzugsweise von 60 °C bis 110 °C, weiter bevorzugt von 80 °C bis 100 °C beträgt, der Fülldruck von 50 bar bis 1000 bar, weiter bevorzugt von 80 bar bis 750 bar und besonders bevorzugt von 100 bar bis 500 bar liegt, und der Prägespalt von 0,5 mm bis 10 mm, vorzugsweise von 2 mm bis 7mm, besonders bevorzugt von 5 mm bis 6 mm ist.

Die Frontscheibe (I) kann im Sinne eines mehrlagigen Verbunds weitere Schichten aufweisen.

Außerdem können in die Frontscheibe folgende Funktionselemente integral ausgeformte und/oder eingebunden sein:
- Heizelemente,
- Antennen,
- Scheibenwischer( und -motor)aufnahme,
- Stylinglinien,
- Strukturelemente für das Wassermanagement (Ableiten von Spritz- und Regenwasser),
- Solarmodule.

Auf der Frontscheibe können zudem eine oder mehrere der folgenden Schichten in unterschiedlichen Abfolgen entweder auf einer Seite der Frontscheibe oder auf beiden Seiten der Frontscheibe aufgebracht werden. Hierzu zählen:
(II) Schichten zur Erhöhung der Kratzfestigkeit insbesondere über dem transparenten Sichtbereich des Fahrzeugbauteils,
(III) Schichten zum Schutz vor Witterungseinflüssen beispielsweise enthaltend UV-Absorber und/oder IR-Absorber, wobei hierzu auch Reflexionsschichten für IR- und UV-Strahlung zählen (IR-Strahlung von 750 nm - 2500 nm, UV-Strahlung von 400 nm bis 180 nm),
(IV) Farbgebende Schichten enthaltend Farbmittel und oder Pigmente,
(V) Schichten zur Ausbildung von Schwarzrändern, verstärkenden Rahmenelementen. Diese können aus den vorgenannten thermoplastischen Kunststoffen oder deren Mischungen hergestellt sein und sind bevorzugt nicht transparent,
(VI) mechanische Verstärkungselemente,
(VII) Funktionsschichten wie Antibeschlag-, Antireflexschichten sowie Schichten zur Transparenzsteuerung (Elektrochromie, Thermotropie, Thermochromie),
(VIII) Dämm- und Isolierschichten.

Schichten zur Erhöhung der Kratzfestigkeit (II):
Es sind verschiedene Methoden bekannt, um eine Kratzfestbeschichtung im Sinne der vorliegenden Erfindung herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können über beispielsweise über Tauchverfahren, Spincoating, Sprühverfahren, oder Flutbeschichtung aufgebracht werden. Die Aushärtung kann thermisch oder mittels UV-Bestrahlung erfolgen. In einer speziellen Ausführungsform wird Kratzfestschicht in einem Inline-Verfahren (Direct Coating / Direct Skinning) direkt auf die Frontscheibe aufgebracht.

Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO2-Plasma.

Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen.

In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 1 - 20 µm, bevorzugt 2 - 15 µm .Unterhalb von 1 µm ist die Beständigkeit der Kratzfestschicht ungenügend. Oberhalb von 20 µm treten häufiger Risse im Lack auf. Das Basismaterial, welches in der vorliegenden Erfindung verwendet werden kann, wird bevorzugt nach Fertigstellung des Spritzgussartikels mit einer oben beschriebenen Kratzfest- und/oder Antireflexschicht versehen, da der bevorzugte Einsatzbereich im Bereich von Fenster- oder- Automobilverscheibung liegt.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten.

Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen.

Abhängig vom gewählten Harz kann die Aushärtung bei Raumtemperatur oder bei erhöhten Temperaturen erfolgen. Bevorzugt werden Temperaturen zwischen 50 °C und 130 °C eingesetzt - häufig nach dem ein Großteil des Lösemittels kurzzeitig bei Raumtemperatur entfernt wurde. Kommerziell erhältliche Systeme sind z.B. SHP470, SHP470FT-2050 und SHP401 der Firma Momentive Performance Materials. Derartige Beschichtungen sind z.B. in US 6350512 B1, US 5869185, WO 2006/108520 sowie EP 1308084 beschrieben.

Kratzfest-Lacke (Hard-Coat) sind bevorzugt aus Siloxanen aufgebaut und enthalten bevorzugt UV-.Absorber. Sie werden bevorzugt über Tauch- oder Fließverfahren aufgebracht. Die Aushärtung erfolgt bei Temperaturen von 50 °C - 130 °C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden. Diese sind z.B. in EP 0570165 oder WO 2008/071363 oder DE 2804283 beschrieben. Kommerziell erhältlich Hybrid-Systeme sind z.B. unter den Namen PHC587 oder UVHC 3000 von Momentive Performance Materials erhältlich.

In einem besonders bevorzugtem Verfahren erfolgt die Applikation des Lackes über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Hierbei könne die Bauteile, sowohl hängend als auch in einem entsprechenden Warenträger gelagert, beschichtet werden.

Bei größeren und/oder 3D-Bauteilen wird das zu beschichtende Teil in einen geeigneten Warenträger eingehangen oder aufgesetzt.

Bei Kleinteilen kann die Beschichtung auch per Hand durchgeführt werden. Hierbei wird die zuschichtende flüssige Primer- oder Lacklösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

Schichten zum Schutz von Witterungseinflüssen (III):
Die Schichten (III) basieren vorzugsweise auf thermoplastischen Kunststoffen, wobei hierbei vorzugsweise die thermoplastischen Kunststoffe, welche auch für die Herstellung der Frontscheibe (I) verwendet werden, zum Einsatz kommen. Polycarbonate und Poly- oder Copolymethacrylate wie z.B. Poly- oder Copolymethylmethacrylate (wie PMMA) sind hierbei besonders bevorzugt. Die zur Herstellung von (III) verwendeten thermoplastischen Kunststoffe werden derart additiviert, dass deren Beständigkeit gegenüber Strahlung insbesondere im Bereich von 180 nm bis 400 nm und/oder im Bereich von 750 nm bis 2500 nm signifikant erhöht wird.

Hierzu werden UV-Absorber (siehe beispielsweise EP 1 308 084 A1, DE 102007011069 A1 oder DE 10311063 A1) und /oder IR Absorber (siehe beispielsweise EP 1 559 743 A1, EP 1 865 027 A1, DE 10022037 A1, DE 10006208 A1 sowie die italienischen Patentanmeldungen RM2010A000225, RM2010A000227 und RM2010A000228) eingesetzt.

Ferner können weitere übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschriebenen, optische Aufheller, Fließverbesserer, Thermostabilisatoren, Entformungsmittel oder Verarbeitungshilfsmittel enthalten sein.

Die Schichten zum Schutz vor Witterungseinflüssen (III) können nach Verfahren hergestellt werden, wie sie für die Fertigung von Mehrschichtsystemen aus einer Basis- und optionaler Deckschicht / optionalen Deckschichten üblich sind. Zu diesen Verfahren zählen die (Co)extrusion, Direct Skinning, Direct Coating, Insert Moulding, Folienhinterspritzen, oder sonstige dem Fachmann bekannte geeignete Verfahren.

Spritzgießverfahren sind dem Fachmann bekannt und beispielsweise im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Extrusionsverfahren sind dem Fachmann bekannt und beispielsweise für die Coextrusion unter anderem beschrieben in EP-A 0 110 221, EP-A 0 110 238 und EP-A 0 716 919. Für Details des Adapter- und Düsenverfahrens siehe Johannaber/Ast:"Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990.

Für die Herstellung von Schwarzrändern beziehungsweise verstärkenden Rahmenelementen (V) bietet sich als Material die Verwendung thermoplastischer Kunststoffe enthaltend Füllbeziehungsweise Verstärkungsstoffe, insbesondere die Verwendung von derart ausgerüsteten Kunststoff Blends an. In diesem Zusammenhang sind Blends enthaltend Polycarbonat und mindestens einen weiteren thermoplastischen Kunststoff bevorzugt.

Die verwendeten Füll- und Verstärkungsstoffe können faser-, plättchen-, röhren-, stäbchen- oder kugelförmig bzw. sphärisch oder partikulär sein. Zu den im Sinne der vorliegenden Erfindung geeigneten Füll- und Verstärkungsstoffen zählen beispielsweise Talk, Wollastonit, Glimmer, Kaolin, Kieselgur, Calciumsulfat, Calciumcarbonat, Bariumsulfat, Glasfasern, Glas- oder Keramikkugeln, Glashohlkugeln oder Keramikhohlkugeln, Glas- oder Mineralwolle, Kohlefasern oder Carbon-Nanotubes. Bevorzugte Füllstoffe sind Füllstoffe, die ein isotropes Schwindungsverhalten der Zusammensetzung bewirken.

Im Rahmen der vorliegenden Erfindung ist die Verwendung von Talk und Kurzglasfasern besonders bevorzugt.

Glas- oder Keramikkugeln oder -hohlkugeln können dabei die Kratzfestigkeit dieser Oberfläche erhöhen.

In den Zusammensetzungen (V) ist der Gehalt an Füll- und Verstärkungsstoffen von 5 Gew.-% bis 40 Gew.-%, vorzugsweise von 7 Gew.-% bis 30 Gew.-%, weiter bevorzugt von 8 Gew.-% bis 25 Gew.-%., wobei sich die Gewichtsangaben auf die Gesamtzusammensetzung von (V) beziehen.

Ferner kann das für die Herstellung von (V) verwendete Material optional die in EP-A 0 839 623, WO-A 96/15102, EP-A 0 500 496 oder "Plastics Additives Handbook", Hans Zweifel, 5th Edition 2000, Hanser Verlag, München beschriebenen üblichen Polymeradditive enthalten.

Hierzu zählen unter anderem organische und/oder organische Farbmittel oder Pigmente, UV-Absorber, IR-Absorber, Entformungsmittel, Thermostabilisatoren oder Verarbeitungsstabilisatoren.

In einer speziellen Ausführungsform der vorliegenden Erfindung handelt es sich bei dem Kunststoff Blend um ein Blend enthaltend mindestens ein Polycarbonat um mindestens einen Polyester, wobei der Polyester bevorzugt ein Polyalkylenterephthalat, weiter bevorzugt ein Polyethylenterephthalat (PET) oder ein Polybutylenterephthalat (PBT) ist. Als Polyester besonders bevorzugt ist PET.

Der Mengenanteil von Polycarbonat in den Polycarbonat Polyester Blends beläuft sich auf 10 Gew.-% bis 90 Gew.-%, bevorzugt 30 Gew.-% bis 80 Gew.-%, weiter bevorzugt 35 Gew.-% bis 70 Gew.-%, besonders bevorzugt 40 Gew.-% bis 65 Gew.-% jeweils bezogen auf die Gesamtzusammensetzung von (V).

Der Mengenanteil des Polyesters in den Polycarbonat Polyester Blends beläuft sich auf 60 Gew.-% bis 5 Gew.-%, bevorzugt 50 Gew.-% bis 10 Gew.-%, weiter bevorzugt 35 Gew.-% bis 10 Gew.-%, besonders bevorzugt 25 Gew.-% bis 15 Gew.-% jeweils bezogen auf die Gesamtzusammensetzung von (V).

Optional können die Zusammensetzungen von (V) auch Elastomermodifikatoren enthalten die in Mengen von 0 Gew.-% bis 25 Gew.-%, bevorzugt 3 Gew.-% bis 20 Gew.-%, weiter bevorzugt 6 Gew.-% 20 Gew.-% und besonders bevorzugt 8 Gew.-% bis 18 Gew.-% enthalten sein können. Auch hier beziehen sich die Gew.-% Angaben auf die Gesamtzusammensetzung von (V)

In einer alternativen speziellen Ausführungsform der vorliegenden Erfindung handelt es sich bei dem bei dem Kunststoff Blend um eine Zusammensetzung umfassend die Kunststoffe A) und B), wobei
A) 10 bis 100 Gew.-Teile, bevorzugt 60 bis 95 Gew.-Teile, besonders bevorzugt 75 bis 95 Gew.-Teile, insbesondere 85 bis 95 Gew.-Teile (bezogen auf die Summe der Komponenten A) und B) mindestens einer Komponente ausgewählt aus der Gruppe bestehend aus aromatischem Polycarbonat, aromatischem Polyestercarbonat, Polymethylmethacrylat-(Co)Polymer und Polystyrol-(Co)Polymer, ist und
B) 0 bis 90 Gew.-Teile, bevorzugt 5 bis 40 Gew.-Teile, besonders bevorzugt 5 bis 25 Gew.-Teile, insbesondere 5 bis 15 Gew.-Teile (bezogen auf die Summe der Komponenten A)und B) mindestens eines Propfpolymerisats.

Das Propfpolymerisat ist bevorzugt hergestellt im Emulsionspolymerisationsverfahren, Suspensionsverfahren, Massepolymerisationsverfahren, oder Lösungsverfahren.
C) optional kautschukfreies Vinylhomopolymerisat und/oder kautschukfreies Vinylcopolymerisat
wobei sich die Gewichtsteile der Komponenten A und B zu 100 addieren.

Die Komponente B umfasst vorzugsweise ein oder mehrere Pfropfpolymerisate von:

| | |
|---|---|
| B.1.1 | 5 bis 95, vorzugsweise 30 bis 90 Gew.-%, wenigstens eines Vinylmonomeren auf |
| B.1.2 | 95 bis 5, vorzugsweise 70 bis 10 Gew.-% einer oder mehrerer Pfropfgrundlagen. |

Die Glasübergangstemperaturen der Propfgrundlagen sind vorzugsweise < 10°C, vorzugsweise < 0°C, besonders bevorzugt < -20°C.

Die Pfropfgrundlage B.1.2 hat im allgemeinen eine mittlere Teilchengröße (d50-Wert) von 0,05 bis 10 µm, vorzugsweise 0,1 bis 5 µm, besonders bevorzugt 0,15 bis 1 µm.

Monomere B.1.1 sind vorzugsweise Gemische aus:

| | |
|---|---|
| B.1.1.1 | 50 bis 99 Gew.-Teilen Vinylaromaten und/oder kernsubstituierten Vinylaromaten (wie Styrol, α-Methylstyrol, p-Methylstyrol, p-Chlorstyrol) und/oder Methacrylsäure-(C1-C8)-Alkylester, wie Methylmethacrylat, Ethylmethacrylat), und |
| B.1.1.2 | 1 bis 50 Gew.-Teilen Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid. |

Bevorzugte Monomere B.1.1.1 sind ausgewählt aus mindestens einem der Monomere Styrol, α-Methylstyrol und Methylmethacrylat, bevorzugte Monomere B.1.1.2 sind ausgewählt aus mindestens einem der Monomere Acrylnitril, Maleinsäureanhydrid und Methylmethacrylat. Besonders bevorzugte Monomere sind B.1.1.1 Styrol und B.1.1.2 Acrylnitril.

Für die Pfropfpolymerisate B.1 geeignete Pfropfgrundlagen B.1.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen B.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Mono-meren (z.B. gemäß B.1.1.1 und B.1.1.2), mit der Maßgabe, dass die Glasübergangstemperatur der Komponente B.2 unterhalb < 10°C, vorzugsweise < 0°C, besonders bevorzugt < 20°C liegt. Besonders bevorzugt ist reiner Polybutadienkautschuk.

Besonders bevorzugte Polymerisate B.1 sind beispielsweise ABS-Polymerisate (Emul¬sions-, Masse- und Suspensions-ABS), wie sie z.B. in der DE-OS 2 035 390 (=US PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.1.2 beträgt mindestens 30 Gew. %, vorzugsweise mindestens 40 Gew.-% (in Toluol gemessen).

Die Glasübergangstemperaturen wird mittels dynamischer Differenz-Thermoanalyse (DSC) gemäß der Norm DIN EN 61006 bei einer Heizrate von 10 K/min mit Definition der Tg als Mittelpunkttemperatur (Tangentenmethode) bestimmt.

Bevorzugt ist ist A) Polycarbonat und B) Acrylnitrilbutadienstyrol (ABS).

Zum Vermeiden von Bauteilspannungen ist darauf zu achten, dass die thermischen Ausdehnungskoeffizienten der einzelnen Schichten durch eine geeignete Materialauswahl aufeinander abgestimmt sind.

Dies ist insbesondere dann wichtig, wenn auf die Frontscheibe ein Schwarzrand beziehungsweise Rahmenelement unmittelbar aufgebracht wird.

Hierbei hat es sich als vorteilhaft herausgestellt, für den Schwarzrand beziehungsweise das Rahmenelement ein Material zu wählen, dessen linearer thermischer Ausdehnungskoeffizient in Längsrichtung (d.h. vom Anguss betrachtet in Richtung des Schmelzflusses, nachfolgend als RS abgekürzt) niedriger ist, als der des Materials der Frontscheibe. Zudem sollte das RS/QS-Verhältnis des linearen thermischen Ausdehnungskoeffizienten des jeweiligen Material in einem relativ engen Bereich liegen, wobei QS die Querrichtung, d. h. die Richtung orthogonal zur vom Anguss betrachteten Richtung des Schmelzflusses meint.

In einer Ausführungsform der vorliegenden Erfindung ist der lineare thermische Ausdehnungskoeffizient des Rahmenmaterials in Längsrichtung um 1x10⁻⁵ bis 3x10⁻⁵ (mm/mm K) niedriger als der des Trägermaterials.

Der Quotient RS/RQ sollte in einem Bereich von 0,6 bis 1,0 liegen.

Das Material zur Ausbildung des Schwarzrandes beziehungsweise des verstärkenden Rahmenelements wird bevorzugt durch partielles Hinterspritzen der Frontscheibe mit dieser verbunden.

Da die Frontscheibe aus einem transparenten thermoplastischen Kunststoff besteht, kann durch das Hinterspritzen mit dem Schwarzrandes beziehungsweise mit dem verstärkenden Rahmenelements ein Sichtbereich im Sinne einer Fensterscheibe dargestellt werden. Bezogen auf die gesamte Frontscheibe beträgt der transparente Sichtbereich in Summe 50 bis 99 %, weiter bevorzugt 60 bis 95 % und besonders bevorzugt 70 bis 90 % der Frontscheibenfläche und kann durchgängig oder in Form von transparenten Teilflächen, welche durch nicht transparentes hinterspritztes Material optisch voneinander getrennt sind, ausgeführt sein.

Der Schwarzrand dient insbesondere dazu, die ästhetische Gestaltung der Frontscheibe zu verbessern, beispielsweise indem durch den Schwarzrand Klebestellen abgedeckt werden.

Sofern die Frontscheibe mit einer A-Säule oder beiden A-Säulen durch Verkleben verbunden ist, kann diese Verklebung durch eine Narbung der Oberfläche der A-Säulen in den betroffenen Bereichen kaschiert werden.

Auf diese Weise kann das ästhetische Erscheinungsbild des erfindungsgemäßen Kraftfahrzeugs weiter verbessert werden.

Die Verstärkungselemente (VI) verleihen der Frontscheibe eine hohe Steifigkeit bei gleichzeitig niedrigem Gewicht und weisen im Rahmen der vorliegenden Erfindung bevorzugt einen Grundkörper, eine Rippenstruktur sowie ein Stützprofil auf und werden vorzugsweise im Spritzgussverfahren oder Extrusionsverfahren hergestellt und können aus demselben Material oder verschiedenen Materialien bestehen. Hierbei kann bevorzugt auch die Frontscheibe (I) oder eine mit ihm mittelbar oder unmittelbar verbundene Schicht selbst den Grundkörper für das Verstärkungselement bilden.

Wie solche Verstärkungselemente ausgeführt sein können, kann beispielsweise der WO2012055873A2 entnommen werden.

Dämmstoffe (VIII) können zur Isolation und Geräuschdämmung, vorzugsweise in einem "Direct Coating"-Verfahren oder durch Einkleben, auf die Innenseite der Frontscheibe, optional auch zwischen oder über die Verstärkungselemente, aufgebracht werden. Vorzugsweise werden hierzu Polyurethan-Systeme verwendet. In einer bevorzugten Ausführungsform wird die Dämmschicht mit einer weiteren Lack- oder Oberflächenschicht versehen, so dass auch eine optisch und haptisch ansprechende innere Oberfläche der Frontscheibe entsteht.

Die Erfindung wird durch die nachfolgenden Figuren erläutert, ohne dass sie auf diese Ausführungsformen beschränkt wäre.

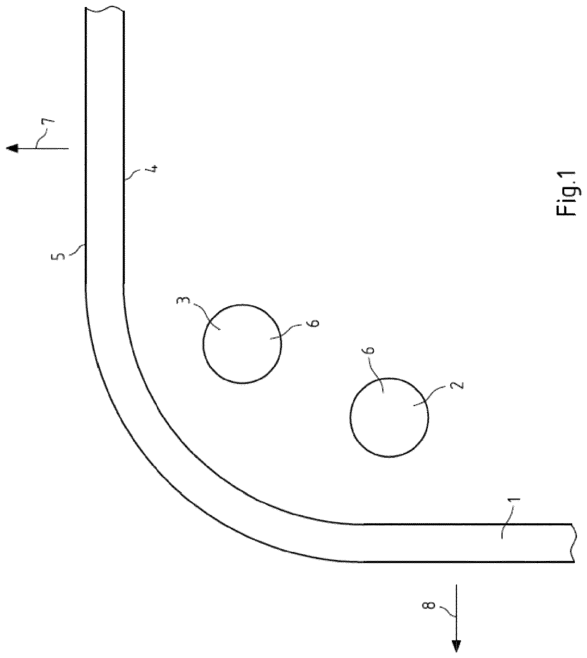

Fig. 1 zeigt in vereinfachter Form einen Ausschnitt aus dem Horizontalschnitt einer Frontscheibe für ein erfindungsgemäßes Fahrzeug einschließlich den beiden Speichen der A-Säule. Bei dem Ausschnitt handelt es sich um einen aus Fahrersicht linken Abschnitts der Frontscheibe, bei der A-Säule entsprechend um die aus Fahrersicht linke A-Säule. Es ist deutlich zu erkennen, dass die Frontscheibe keine Verbindung zu einer oder beiden der A-Säulen aufweist.

Es sind:
- 1: Frontscheibe
- 2: hintere Speiche der linken A-Säule
- 3: vordere Speiche der linken A-Säule
- 4: Frontscheibeninnenseite
- 5: Frontscheibenaußenseite
- 6: A-Säule
- 7: Blick in Fahrtrichtung bei Vorwärtsfahrt
- 8: Blick nach links für bei Vorwärtsfahrt in Fahrtrichtung sitzenden Fahrer

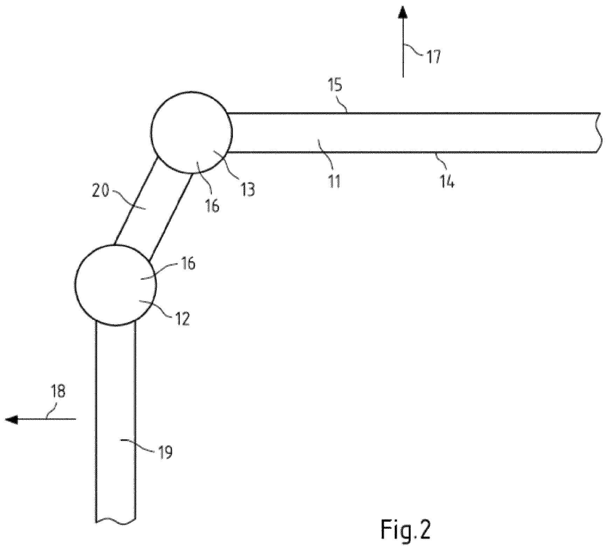

Fig. 2 zeigt in vereinfachter Form einen Ausschnitt aus dem Horizontalschnitt einer Frontscheibe aus dem Stand der Technik einschließlich den beiden Speichen der A-Säule aus dem Stand der Technik. Bei dem Ausschnitt handelt es sich um einen aus Fahrersicht linken Abschnitts der Frontscheibe, bei der A-Säule entsprechend um die aus Fahrersicht linke A-Säule.
- 11: Frontscheibe
- 12: hintere Speiche der linken A-Säule
- 13: vordere Speiche der linken A-Säule
- 14: Frontscheibeninnenseite
- 15: Frontscheibenaußenseite
- 16: A-Säule
- 17: Blick in Fahrtrichtung bei Vorwärtsfahrt
- 18: Blick nach links für bei Vorwärtsfahrt in Fahrtrichtung sitzenden Fahrer
- 19: linkes Seitenfenster
- 20: mit Fenster versehene Durchsichtöffnungen der A-Säule

Der Vergleich der Frontscheibe für ein erfindungsgemäßes Fahrzeug mit der Frontscheibe für ein Fahrzeug aus dem Stand der Technik lässt erkennen, dass bei der erfindungsgemäßen Ausführungsform der tote Winkel für den Fahrer kleiner ist als bei der Ausführungsform aus dem Stand der Technik. Dadurch wird bei der erfindungsgemäßen Ausführungsform eine verringerte Unfallgefahr bewirkt.

## Patentansprüche

1. Kraftfahrzeug, aufweisend zwei A-Säulen (6) und eine Frontscheibe (11), **dadurch gekennzeichnet, dass**:
die Frontscheibe (11) im Bereich der A-Säulen (6) an der der jeweiligen A-Säule (6) zugewandten Seite jeweils eine Krümmung mit einem Krümmungsradius von 5000 bis 5 mm aufweist, bevorzugt von 500 bis 10, besonders bevorzugt 200 bis 20 mm, ganz besonders bevorzugt von 150 bis 30 mm, insbesondere 100 bis 50 mm, aufweist und die Frontscheibe (11) keine mechanische Verbindung zu den zwei A-Säulen (6) aufweist.

2. Kraftfahrzeug nach Anspruch 1, **dadurch gekennzeichnet, dass** zwischen der Frontscheibeninnenseite (4) und dem zu der Frontscheibeninnenseite (4) nächst liegenden Punkt der jeweils nächsten A-Säule (6) ein Abstand von 100 bis 1 mm, bevorzugt von 70 bis 5 mm, besonders bevorzugt von 50 bis 10 mm, ganz besonders bevorzugt etwa 20 mm, besteht.

3. Kraftfahrzeug nach Anspruch 1 oder 2, **dadurch gekennzeichnet, dass** die A-Säulen (6) in Form zweier Speichen (2, 3) mit einer dazwischen liegenden Öffnung ausgeführt sind.

4. Kraftfahrzeug nach Anspruch 3, **dadurch gekennzeichnet, dass** zwischen den Speichen (2, 3) nur Luft ist.

5. Kraftfahrzeug nach einem der Ansprüche 1 bis 4, **dadurch gekennzeichnet, dass** sich weder zwischen der Frontscheibenaußenseite (5) und einer A-Säule (6) eine Fuge befindet, noch zwischen den Frontscheibenseitenbereichen und einer A-Säule (6) eine Fuge befindet.

6. Kraftfahrzeug nach einem der Ansprüche 1 bis 5, **dadurch gekennzeichnet, dass** zur Herstellung der Frontscheibe (11) ein thermoplastischer Kunststoff ausgewählt aus Polycarbonat, Copolycarbonat, Polyestercarbonat, aromatischer Polyester oder Polymethylmethacrylat, oder Mischungen der genannten Komponenten verwendet wird.

7. Kraftfahrzeug nach einem der Ansprüche 1 bis 6, **dadurch gekennzeichnet, dass** die Krümmung der Frontscheibe (11) einen Winkel von 45° bis 135°, bevorzugt von 60° bis 120°, besonders bevorzugt von 75° bis 105°, ganz besonders bevorzugt von 95° bis 100°, überstreicht.

8. Kraftfahrzeug nach einem der Ansprüche 1 bis 7, **dadurch gekennzeichnet, dass** die Frontscheibe (11) eine Wandstärke von 20 bis 2 mm, bevorzugt von 12 bis 3 mm, besonders bevorzugt von 8 bis 4 mm, ganz besonders bevorzugt 7 bis 4,5 mm aufweist.

## Claims

1. Motor vehicle, having two A-pillars (6) and a windscreen (11), **characterized in that**,
the windscreen (11) has in each case, in the region of the A-pillars (6), at the side facing towards the respective A-pillar (6), a curvature with a curvature radius of from 5000 to 5 mm, preferably of from 500 to 10 mm, particularly preferably from 200 to 20 mm, very particularly preferably of from 150 to 30 mm, in particular from 100 to 50 mm, and the windscreen (11) has no mechanical connection to the two A-pillars (6).

2. Motor vehicle according to Claim 1, **characterized in that** the distance between the internal side (4) of the windscreen and the point closest to the internal side (4) of the windscreen on the respective closest A-pillar (6) is from 100 to 1 mm, preferably from 70 to 5 mm, particularly preferably from 50 to 10 mm, very particularly preferably about 20 mm.

3. Motor vehicle according to Claim 1 or 2, **characterized in that** the A-pillars (6) are configured in the form of two spokes (2, 3) with an aperture therebetween.

4. Motor vehicle according to Claim 3, **characterized in that** only air is present between the spokes (2, 3) .

5. Motor vehicle according to any of Claims 1 to 4, **characterized in that** there is no gap between the external side (5) of the windshield and an A-pillar (6), and there is no gap between the lateral areas of the windshield and an A-pillar (6).

6. Motor vehicle according to any of Claims 1 to 5, **characterized in that** a thermoplastic selected from polycarbonate, copolycarbonate, polyester carbonate, aromatic polyester or polymethyl methacrylate, or mixtures of the components mentioned, is used for the production of the windscreen (11).

7. Motor vehicle according to any of Claims 1 to 6, **characterized in that** the curvature of the windscreen (11) extends over an angle of from 45° to 135°, preferably from 60° to 120°, particularly preferably from 75° to 105°, very particularly preferably from 95° to 100°.

8. Motor vehicle according to any of Claims 1 to 7, **characterized in that** the wall thickness of the windscreen (11) is from 20 to 2 mm, preferably from 12 to 3 mm, particularly preferably from 8 to 4 mm, very particularly preferably 7 to 4.5 mm.

## Revendications

1. Véhicule automobile comportant deux montants A (6) et un pare-brise (11), **caractérisé en ce que** :
le pare-brise (11) présente, dans la région des montants A (6) du côté dirigé vers le montant A respectif (6), une courbure dont le rayon de courbure va de 5000 à 5 mm, de préférence de 500 à 10, de manière particulièrement préférée de 200 à 20 mm, de manière tout particulièrement préférée de 150 à 30 mm, en particulier de 100 à 50 mm, et le pare-brise (11) ne comporte pas de liaison mécanique avec les deux montants A (6).

2. Véhicule automobile selon la revendication 1, **caractérisé en ce qu'**une distance de 100 à 1 mm, de préférence de 70 à 5 mm, de manière particulièrement préférée de 50 à 10 mm, de manière tout particulièrement préférée d'environ 20 mm, est ménagée entre le côté intérieur (4) du pare-brise et le point du montant A suivant (6) le plus proche, situé près du côté intérieur (4) du pare-brise.

3. Véhicule automobile selon la revendication 1 ou 2, **caractérisé en ce que** les montants A (6) sont conçus sous la forme de deux rayons (2, 3) entre lesquels est ménagée une ouverture.

4. Véhicule automobile selon la revendication 3, **caractérisé en ce que**, entre les rayons (2, 3), il n'y a que de l'air.

5. Véhicule automobile selon l'une des revendications 1 à 4, **caractérisé en ce qu'**aucun joint n'est présent ni entre le côté extérieur (5) du pare-brise et un montant A (6) ni entre les régions latérales du pare-brise et un montant A (6).

6. Véhicule automobile selon l'une des revendications 1 à 5, **caractérisé en ce qu'**une matière thermoplastique choisie parmi le polycarbonate, le copolycarbonate, le carbonate de polyester, le polyester aromatique ou le polyméthacrylate de méthyle, et des mélanges des composants mentionnés, est utilisée pour réaliser le pare-brise (11).

7. Véhicule automobile selon l'une des revendications 1 à 6, **caractérisé en ce que** la courbure du pare-brise (11) a un angle de 45° à 135°, de préférence de 60° à 120°, de manière particulièrement préférée de 75° à 105°, de manière tout particulièrement préférée de 95° à 100°.

8. Véhicule automobile selon l'une des revendications 1 à 7, **caractérisé en ce que** le pare-brise (11) a une épaisseur de paroi de 20 à 2 mm, de préférence de 12 à 3 mm, de manière particulièrement préférée de 8 à 4 mm, de manière tout particulièrement préférée de 7 à 4,5 mm.
